# EUROPEAN PATENT APPLICATION

(11) **EP 4 672 581 A1**
(43) Date of publication of application: **31.12.2025**
(21) Application number: 24460023.5
(22) Date of filing: 28.06.2024
(51) Int. Cl.: H02M 1/32, H02M 1/34, H02M 3/156, H02M 3/158

(54) **SWITCH-MODE DC-DC-CONVERTER WITH VOLTAGE LIMITING**

(71) Applicant: TRUMPF Huettinger Sp. Z o. o., 05-220 Zielonka (PL)
(72) Inventor: The designation of the inventor has not yet been filed
(74) Representative: Trumpf Patentabteilung

(57) **Abstract**

Switch-mode DC-DC-converter (100),
in particular as part of a switch-mode DC-DC-pulsing-converter (180)
which may be a part of a plasma power supply (80),
comprising:
• a positive input connection (101),
• a negative input connection (103),
• a positive output connection (105),
• a negative output connection (107),
• a first energy accumulating inductance (111),
• a first power control switching element (113), e.g., a transistor,
• a first free-wheeling unidirectional element (115), e.g., a diode,
• a first voltage limiting capacitor (117),
• a first charge control unidirectional element (119), e.g., a diode, and
• a first charge control inductance (116), and wherein

the first energy accumulating inductance (111), the first power control switching element (113), and the first free-wheeling unidirectional element (115) are connected together with their respective first end in a first star-point-connection (110) and, with their respective second end, to one of the input and/or output connections, and wherein the first voltage limiting capacitor (117) and the charge control unidirectional element (119) connected together in an additional star-point-connection (120) and, on their other end, to one of the input and/or output connections, and wherein the first charge control inductance (116) is connected to the additional star-point-connection (120) and to a voltage reference point, e.g., the first star-point-connection (110) or one of the input and/or output connections.

## Description

The invention relates to the field of power electronics, specifically to switch-mode DC-DC converters used for converting DC voltages with improved voltage limiting and current handling capabilities, particularly useful for supplying power to plasma processes and other applications prone to instable load resistance and short-circuits.

Examples of such a plasma power supply are disclosed e.g., in US 6,621,674 B1 or EP 2 156 505 B1.

DC-DC-converters are widely used in various applications to convert a source of direct current (DC) from one voltage level to another voltage level. In the case of a plasma process as a load for such a DC-DC-converter, frequent short-circuits due to arcing can cause significant voltage and current spikes, potentially damaging the converter and connected components. Traditional converters often struggle to handle these rapid and extreme changes in current and voltage effectively. Switch-mode DC-DC-converters operate with one or several switching element(s), e.g., transistor(s) in a switching mode as explained below in more detail.

The invention relates also to a switch-mode DC-DC-pulsing-converter comprising such a switch-mode DC-DC-converter.

The invention relates also to a plasma power supply comprising such a switch-mode DC-DC-converter or such a switch-mode DC-DC-pulsing-converter.

The invention relates also to a plasma processing system with such a plasma power supply.

The present invention is based on the task of providing a switch-mode DC-DC converter, a switch-mode DC-DC-pulsing-converter, a plasma power supply, or a plasma processing system with improved stability and reliability and/or reduced costs.

This task is solved by a switch-mode DC-DC converter according to claim 1, a switch-mode DC-DC-pulsing-converter according to claim 11, a plasma power supply according to claim 14, and/or a plasma processing system according to claim 15. Advantageous further embodiments result from the subclaims and/or the description.

The disclosed switch-mode DC-DC-converter addresses the issues of voltage and current spikes during short-circuits, particularly in plasma processes, by incorporating a voltage limiting circuit, charge control unidirectional elements, and a loop-current-inhibiting element. The converter is designed to provide stable voltage control and effective current dampening, enhancing the reliability and performance of the power conversion process.

There is disclosed a switch-mode DC-DC-converter comprising:
- a positive input connection,
- a negative input connection,
- a positive output connection,
- a negative output connection,
- a first energy accumulating inductance,
- a first power control switching element, e.g., a transistor,
- a first free-wheeling unidirectional element, e.g., a diode,
- a first voltage limiting capacitor,
- a first charge control unidirectional element, e.g., a diode, and
- a first charge control inductance, and wherein
the first energy accumulating inductance, the first power control switching element, and the first free-wheeling unidirectional element connected together with their respective first end in a first star-point-connection and, with their respective second end, to one of:
- the positive input connection,
- the negative input connection,
- the positive output connection, or
- the negative output connection, and wherein
the first voltage limiting capacitor and the charge control unidirectional element connected together in an additional star-point-connection and, on their other end, to one of:
- the positive input connection,
- the negative input connection,
- the positive output connection, or
- the negative output connection, and wherein
the first charge control inductance connected to the additional star-point-connection and to a voltage reference point, e.g., the first star-point-connection or one of:
- the positive input connection,
- the negative input connection,
- the positive output connection, or
- the negative output connection.

Such a design may contribute to improved stability and reliability and/or reduced costs.

A DC-DC converter is an electronic device that converts direct current (DC) from one voltage level to another. These converters can either step up (boost), step down (buck), or invert the voltage.

A DC-DC converter comprises usually an energy accumulating inductance, such as an inductor, a capacitor, power control switching element, e.g., a transistor, free-wheeling unidirectional element, e.g., a diode, and a controller. The inductor stores energy in a magnetic field when current flows through it and provides energy transfer between input and output, smoothing out the current. The capacitor stores energy in an electric field and helps to smooth out the voltage and reduce voltage ripple in the output. The switching element controls the energy flow through the inductor by switching on and off at high frequencies of about 10 kHz or more, often about 1 MHz or more. As transistor switch, MOSFETs are preferably used due to their efficiency and fast switching capabilities. The diode provides a path for current when the transistor switch is off. Schottky diodes are often used due to their low forward voltage drop and fast recovery time. The controller regulates the switching frequency and duty cycle of the transistor, ensuring stable output voltage despite variations in input voltage or load.

The main types of DC-DC converters include buck converters, boost converters, buck-boost converters, Cuk converters, and SEPIC converters. A buck converter, also called step-down converter, reduces the input voltage to a lower output voltage. A boost converter, also called step-up converter, increases the input voltage to a higher output voltage. It uses a similar setup as the buck converter but configured differently. The buck-boost converter, also called step-up-down converter, can either increase or decrease the input voltage. It combines the principles of buck and boost converters. The output voltage can be less than or greater than the input voltage, depending on the duty cycle of the transistor switch. The Cuk converter can also either increase or decrease the input voltage, providing an inverted output voltage. It uses capacitive energy transfer with an inductor and capacitor to invert and adjust the voltage. The SEPIC (Single-Ended Primary Inductor Converter) provides a non-inverted output voltage that can be either higher or lower than the input voltage. It is similar to the Cuk converter but provides a positive output voltage.

The operation of a buck converter is explained here in more detail: When the transistor is switched on, current flows through the inductor, storing energy in its magnetic field. The inductor resists sudden changes in current, so it builds up gradually. When the transistor is off, the inductor releases its stored energy. The current flows through the diode to the output capacitor and load, providing a lower, stable output voltage. The controller IC adjusts the duty cycle, in other words: the ratio of on-time to off-time of the transistor to maintain the desired output voltage despite changes in input voltage or load conditions. The other types of DC-DC converters, such as boost, buck-boost, Cuk, and SEPIC work in a similar way, just the components, such as inductor, transistor, and diode are arranged differently and in some cases supplemented by additional components.

An "unidirectional element" shall have the meaning of an element leading current preferable only in one direction and inhibiting the current flow in the other direction. The most common electronical part available which does so, is a diode. There are different options of a diode such as silicon (Si) diode, Schottky-diode, silicon carbide (SiC) diode, fast recovery diode, ultra-fast recovery diode, high-current rectifier diode, etc.

There are several alternatives to a diode for achieving unidirectional current flow in an electronic circuit, e.g.. bipolar junction transistor (BJT), field-effect transistor (FET), thyristors, silicon-controlled rectifier (SCR), relay, unidirectional transient voltage suppressors (TVS), etc. BJTs can be configured to function as unidirectional elements. When used as a switch, a BJT can allow current to flow in one direction when it is in the "on" state and block current when it is in the "off" state. In a common-emitter configuration, the transistor will allow current to flow from the collector to the emitter when the base is forward biased. FETs, such as MOSFETs, can also be used as unidirectional elements. When properly biased, they can allow current to flow in one direction, e.g., from drain to source in an N-channel MOSFET and block it in the reverse direction. Thyristors, like SCRs, are semiconductor devices that conduct current only after a gate pulse is applied and continue to conduct as long as they are forward biased. They can act as unidirectional elements in power control applications. Relays, e.g., solid-state, or electromechanical relays, can be used to control the direction of current flow. When the relay coil is energized, it can close contacts to allow current to flow in one direction. When de-energized, the contacts open, blocking current flow. Solid-state relays, which use semiconductor devices instead of mechanical contacts, can also provide unidirectional current flow. While TVS diodes are often used for protecting circuits from voltage spikes, they can also act as unidirectional elements in some cases by allowing current to flow only during transient events.

In one aspect, the switch-mode DC-DC-converter comprises a first loop-current-inhibiting element, e.g., a transistor, connected in a serial circuit comprising this first loop-current-inhibiting element, the first voltage limiting capacitor, and the first charge control inductance, all connected in series.

A "current-inhibiting element" refers to a component or device in an electrical circuit designed to restrict or prevent the flow of electric current. These elements are used to control, limit, or stop the current in specific parts of a circuit to protect components, manage power distribution, or regulate circuit operation. Examples of a current-inhibiting element could be a resistor, a diode, a transistor, a fuse, an inductor. Most preferred is here a transistor, in particular a MOSFET. This transistor may be used in a partly conducting way to control the current or in switching mode. Most preferred is the switching mode as it is most efficient.

In one aspect, the serial circuit with the first loop-current-inhibiting element is connected between the positive output connection and negative output connection. Such a design may further contribute to improved stability and reliability and/or reduced costs.

In one aspect, the serial circuit with the first loop-current-inhibiting element is connected between the positive or negative output connection and the first star-point-connection. Such a design may further contribute to improved stability and reliability and/or reduced costs.

In one aspect, the switch-mode DC-DC-converter comprises:
- a second energy accumulating inductance,
- a second power control switching element, e.g., a transistor,
- a second free-wheeling unidirectional element, e.g., a diode, and
- a second charge control inductance, and wherein
the second energy accumulating inductance, the power control switching element, and the second free-wheeling unidirectional element connected together with their respective first end in a second star-point-connection and, with their respective second end, to one of:
- the positive input connection,
- the negative input connection,
- the positive output connection, or
- the negative output connection, and wherein
the second charge control inductance is connected to the additional star-point-connection and to a voltage reference point, e.g., the second star-point-connection or one of:
- the positive output connection,
- the negative output connection.

In such a way the basic parts of a DC-DC-converter may be connected in parallel, and other parts may be used only once for both parallel connected parts of the DC-DC-converter.

The first, the second and the additional star-point may all be allocated at different places which should mean that they do not have a direct connection to each other, there is always at least one component between the star-points.

In one aspect, the first charge control inductance is connected between the first energy accumulating inductance and one of
- the positive output connection,
- the negative output connection.

Such a design may further contribute to improved stability and reliability and/or reduced costs.

In one aspect, a voltage limiting unidirectional element, e.g., a diode, is connected parallel to the first free-wheeling unidirectional element, with the first energy accumulating inductance connected between the one end of the first free-wheeling unidirectional element and one end of the first energy accumulating inductance.

Such a design may further contribute to improved stability and reliability and/or reduced costs.

In one aspect, a voltage limiting unidirectional element, e.g., a diode, is connected between the first charge control inductance and one of
- the positive input connection,
- the negative input connection,
- the positive output connection, or
- the negative output connection.

Such a design may further contribute to improved stability and reliability and/or reduced costs.

In one aspect, a voltage limiting unidirectional element, e.g., a diode, is connected between the first energy accumulating inductance and one of
- the positive input connection,
- the negative input connection,
- the positive output connection, or
- the negative output connection.

Such a design may further contribute to improved stability and reliability and/or reduced costs.

In one aspect, the switch-mode DC-DC-converter comprises a first step-down-converter, wherein the first step-down-converter comprises the first energy accumulating inductance, the first power control switching element, e.g., transistor, and the first free-wheeling unidirectional element, e.g., diode.

The step-down-converter may comprise further a controller, switching on and off the first power control switching element as disclosed earlier. Such a controller, in particular this said controller, may also be used to switch on and off the first loop-current-inhibiting element, e.g., transistor.

In one aspect, the switch-mode DC-DC-converter comprises a second step-down-converter, wherein the second step-down-converter comprises the second energy accumulating inductance, the second power control switching element, e.g., transistor, and the second free-wheeling unidirectional element, e.g., the diode. A controller as mentioned above, in particular the same controller as mentioned above, may also be used for the switching on and off the second power control switching element.

In one aspect, the switch-mode DC-DC-converter comprises one or several step-up converter(s).

The first step-up converter may comprise the first energy accumulating inductance, the first power control switching element, e.g., transistor, and the first free-wheeling unidirectional element, e.g., diode.

A second step-up converter may comprise the second energy accumulating inductance, the second power control switching element, e.g., transistor, and the second free-wheeling unidirectional element, e.g., diode as mentioned earlier.

In one aspect, the switch-mode DC-DC-converter comprises one or several step-up-down converters.

The first step-up-down converter may comprise the first energy accumulating inductance, the first power control switching element, e.g., transistor, and the first free-wheeling unidirectional element, e.g., diode.

A second step-up-down converter may comprise the second energy accumulating inductance, the second power control switching element, e.g., transistor, and the second free-wheeling unidirectional element, e.g., diode as mentioned earlier.

In one aspect, a switch-mode DC-DC-pulsing-converter comprises a switch-mode DC-DC-converter as disclosed in this application and a pulsing unit comprising a positive pulsing unit input connection, a negative pulsing unit input connection, a positive pulsing unit output connection, and a negative pulsing unit output connection, an interrupting pulsing unit switching element, and a short-circuit pulsing unit switching element.

The positive and negative pulsing unit input connections receive the input power or signal to the pulsing unit. The positive input connection is where the positive voltage is applied, and the negative input connection is where the ground or negative voltage from the DC-DC-converter is applied. The positive and negative pulsing unit output connections deliver the pulsed output signal or power. The positive output connection is where the positive voltage pulse is delivered, and the negative output connection serves as the return path for the current.

The interrupting pulsing unit switching element acts as a switch that controls the flow of current between the input and output connections. When this switching element is activated, it interrupts the current flow, effectively turning the pulse on and off. This element is beneficial for generating the pulsed nature of the output signal. The short-circuit pulsing unit switching element is used to create a short-circuit condition in the pulsing unit when needed. It can divert the current flow, providing a direct path between both input connections, or it can be used to protect the circuit by redirecting the current in case of an overload or fault condition.

In one aspect, the switch-mode DC-DC-pulsing-converter comprises a load circuit free-wheeling component, e.g., a diode, connected between the positive pulsing unit output connection and the negative input connection or between the positive input connection and the negative pulsing unit output connection.

A "free-wheeling component" in an electrical circuit may refer to a diode or similar device that allows current to circulate through an inductive load when the main driving voltage is removed or switched off. The primary purpose of a free-wheeling component is to provide a path for the current generated by the collapsing magnetic field in inductive loads, such as inductors, when the driving current is suddenly interrupted. Without this path, the collapsing magnetic field would generate a high voltage spike, potentially damaging other components in the circuit. The free-wheeling component operates by conducting current during the off periods of a switching device, such as a transistor or MOSFET. When the switch is on, current flows through the inductive load, storing energy in the magnetic field. When the switch turns off, the stored energy in the magnetic field needs a path to discharge. The free-wheeling diode provides this path, allowing the current to circulate through the load and diode, thereby preventing the high voltage spike. There are several alternatives to a diode for achieving free-wheeling flow in an electronic circuit, e.g., bipolar junction transistor (BJT), field-effect transistor (FET), thyristors, silicon-controlled rectifier (SCR) as mentioned earlier for the unidirectional element. The most preferred embodiment for a free-wheeling component is a diode, in particular a Schottky diode.

In one aspect, the switch-mode DC-DC-pulsing-converter comprises a pulser free-wheeling component, e.g., a diode, connected between the positive pulsing unit output connection and the positive input connection or between negative pulsing unit output connection and the negative input connection.

For this pulser free-wheeling component applies the same as for the load circuit free-wheeling component.

In one aspect, a plasma power supply comprises a switch-mode DC-DC-converter or a switch-mode DC-DC-pulsing-converter as disclosed in this application, configured to deliver power of at least 500 W, preferably of at least 1 kW, to a plasma process in a plasma chamber.

A plasma power supply faces several challenges that stem from the unique requirements and properties of plasma generation and control. One primary challenge is the need for precise control of the power output. Plasma processes often require very specific power levels and waveforms to maintain stable plasma conditions. Achieving this precision necessitates sophisticated power control circuits and real-time monitoring systems to adjust the power delivery dynamically. Another significant challenge is managing the high voltages and currents typically involved in plasma generation. Plasma power supplies must handle these extreme conditions without compromising safety or performance. This requires robust insulation, advanced cooling systems, and components that can withstand high thermal and electrical stresses. The instability and variability of plasma also pose difficulties. Plasma can be highly unpredictable, with sudden changes in impedance and potential arcing. The power supply must be able to respond quickly to these changes to prevent damage and maintain stable plasma conditions. This often involves fast-acting protection circuits and adaptive control algorithms. Power efficiency is another critical issue. Plasma generation can be an energy-intensive process, so maximizing the efficiency of the power supply is essential to reduce operational costs and environmental impact. This often requires advanced power conversion technologies and careful design to minimize energy losses. Electromagnetic interference (EMI) is also a concern with plasma power supplies. The high-frequency switching, and the large currents can generate significant EMI which can affect other sensitive equipment. Effective shielding, filtering, and grounding techniques are necessary to mitigate these effects.

In summary, the challenges of a plasma power supply include precise power control, handling high voltages and currents, managing plasma instability, achieving high power efficiency, mitigating electromagnetic interference, and addressing size and cooling requirements. These challenges require sophisticated design, robust components, and advanced control systems to ensure reliable and efficient plasma generation and control.

In one aspect, a plasma processing system comprises a plasma power supply as disclosed in this application and a plasma chamber, configured to build a plasma process inside the plasma chamber where this plasma process works as a load for the plasma power supply.

Additional objects and advantages of the invention will be set forth in the description which follows and will be obvious from the description. The objects and advantages of the invention may be realized and obtained by means of a method, processes, devices, instrumentalities, and combinations, particularly pointed out in the claims.

A detailed description of non-limiting embodiments is presented hereinbelow with reference to the accompanying drawings, in which:
Fig. 1 shows a first embodiment of a switch-mode DC-DC-pulsing-converter with a switch-mode DC-DC-converter, a pulsing unit, connected to a load.
Fig. 2 shows a second embodiment of a switch-mode DC-DC-pulsing-converter with a switch-mode DC-DC-converter, a pulsing unit, connected to a load.
Fig. 3 shows a third embodiment of a switch-mode DC-DC-pulsing-converter with a switch-mode DC-DC-converter, a pulsing unit, connected to a load.
Fig. 4 shows a forth embodiment of a switch-mode DC-DC-pulsing-converter with a switch-mode DC-DC-converter comprising two step-down-converters, a pulsing unit, connected to a load.
Fig. 5 shows a fifth embodiment of a switch-mode DC-DC-converter.
Fig. 6 shows a sixth embodiment of a switch-mode DC-DC-converter.
Fig. 7 shows a seventh embodiment of a switch-mode DC-DC-converter.
Fig. 8 shows a first embodiment of a plasma processing system.
Fig. 9 shows a second embodiment of a plasma processing system.

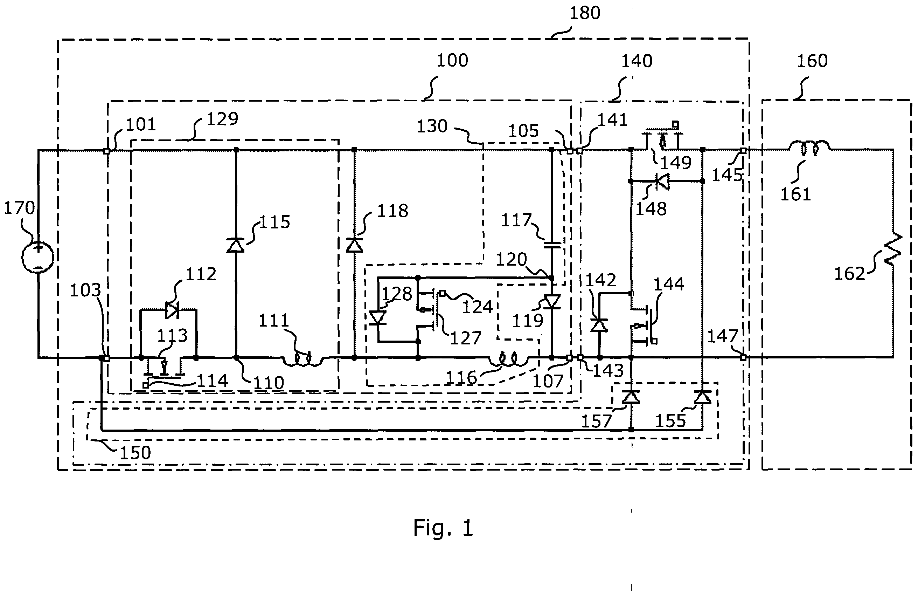

Fig. 1 shows a first embodiment of a switch-mode DC-DC-pulsing-converter 180 comprising a switch-mode DC-DC-converter 100 and a pulsing unit 140. The DC-DC-pulsing-converter 180 is connected to a load 160. The load may be a plasma process. The load is here represented by a load inductance 161 and a load resistance 162 as a plasma process has often such a characteristic, at least in connection with a connecting cable.

The pulsing unit 140 comprises:
A positive pulsing unit input connection 141, a negative pulsing unit input connection 143, a positive pulsing unit output connection 145, a negative pulsing unit output connection 147, an interrupting pulsing unit switching element 149, a short-circuit pulsing unit switching element 144, and a pulser overvoltage protection circuit 150. The interrupting pulsing unit switching element 149 may be a transistor, in particular a MOSFET. Parallel to the output connections of the interrupting pulsing unit switching element 149 - which may be source and drain, or collector and emitter - is connected an antiparallel diode 148 of the interrupting pulsing unit switching element 149. This diode may be the parasitic diode of the transistor. The short-circuit pulsing unit switching element 144 may be a transistor in particular a MOSFET. Parallel to the output connections of the short-circuit pulsing unit switching element 144 - which may be source and drain, or collector and emitter - is connected an antiparallel diode 142 of the short-circuit pulsing unit switching element 144. This diode may be the parasitic diode of the transistor.

The pulser overvoltage protection circuit 150 comprises a load circuit free-wheeling component 155. This may be a diode, or another freewheeling component as disclosed above. The pulser overvoltage protection circuit 150 comprises a pulser free-wheeling component 157. This may be a diode, or another freewheeling component as disclosed above.

The advantages of using a free-wheeling component may include protecting the switching device from high voltage transients, improving the efficiency of the circuit by ensuring the inductive energy is dissipated safely, and enhancing the performance of inductive loads by providing a smooth path for current flow during switching operations. This component is essential in power electronics and motor control applications, where managing inductive loads effectively is crucial for reliable and efficient circuit operation.

The pulser overvoltage protection circuit 150 is connected to several of the positive pulsing unit input connection 141, the negative pulsing unit input connection 143, the positive pulsing unit output connection 145, the negative pulsing unit output connection 147.

A pulsing unit 140 as disclosed in this application may serve as to controlling the flow of current in a precise and timed manner. This configuration may allow for precise control over the current flow, which is beneficial in applications where timing and duration of the current pulses are critical, such as in a plasma processing. The short-circuit switching element provides an additional layer of protection, ensuring the safety of the circuit by creating a controlled short-circuit in the event of an overcurrent or fault condition. This protection helps in preventing damage to sensitive components. This configuration is versatile because it can generate precise pulses for control signals, handle power modulation, and provide safety features all in one unit. In applications such as switching power supplies, the ability to control the pulsing precisely allows for improved efficiency. The switching elements can minimize power losses by ensuring that the current flows only when needed and is interrupted when not necessary. The combination of these elements ensures that the pulsing unit 140 can operate reliably and effectively in dynamic conditions. It can adapt to changes in load or input conditions, maintaining consistent performance. Designers can leverage the features of the pulsing unit 140 to create circuits that require precise timing, protection mechanisms, and efficient power management, making it suitable for a wide range of electronic and electrical engineering applications.

The switch-mode DC-DC-converter 100 comprises:
a positive input connection 101, a negative input connection 103, a positive output connection 105, a negative output connection 107, a first energy accumulating inductance 111, a first power control switching element 113, e.g., a transistor, a first free-wheeling unidirectional element 115, e.g., a diode, a first voltage limiting capacitor 117, a first charge control unidirectional element 119, e.g., a diode, and a first charge control inductance 116. The first energy accumulating inductance 111, the first switching element 113, and the first unidirectional element 115 are connected together with their respective first end in a first star-point-connection 110. The first energy accumulating inductance 111 is connected with its second end to the negative output connection 107 over a first charge control inductance 116. The first switching element 113 is connected with its second end to the negative input connection 103. The first unidirectional element 115 is connected with its second end to the positive output connection 105 and the positive input connection 101. The first capacitor 117 and the second unidirectional element 119 are connected together in an additional star-point-connection 120. The first capacitor 117 is connected with its second end to the positive output connection 105. The second unidirectional element 119 is connected with its second end to the negative output connection 107. The first charge control inductance 116 is connected to the additional star-point-connection 120 and to a voltage reference point, e.g., the first star-point-connection 110 or one of the positive output connection 105 or negative output connection 107. In Fig. 1, the voltage reference point is the negative output connection 107.

The first energy accumulating inductance 111, the first power control switching element 113, and the first free-wheeling unidirectional element 115, are building a basic DC-DC-converter, such as a step-down-converter 129, e.g..

The first power control switching element 113 may be a transistor, in particular a MOSFET. The first power control switching element 113 comprises two output connections, e.g., source and drain, or collector and emitter, and one first control connection 114 where the control signal for switching of this component may be connected. Parallel to the output connections of the first power control switching element 113 is connected an antiparallel diode 112 of the first loop-current-inhibiting element. This diode may be the parasitic diode of the transistor.

The first voltage limiting capacitor 117 together with the charge control unidirectional element 119 build a voltage limiting circuit. The charge control unidirectional element 119, e.g., the diode, is needed to prohibit current spikes, when at the output of the switch-mode DC-DC-converter 100 a short-circuit may arise. This could happen in a plasma-process quite often because such processes do often build up an arc which behaves like a short circuit or a very fast decrease of load resistance. Such a short-circuit may also arise when a switching element 144 of a pulsing unit 140 connects the output connections 105, 107 of the switch-mode DC-DC-converter 100.

With this series connection of the voltage limiting capacitor 117 and the first charge control unidirectional element 119, e.g., as a diode, the problem arises that the voltage limiting capacitor 117 will only be charged, but not discharged and voltage over it increases to much too high values. To keep the voltage in a predefined range, the first charge control inductance 116 is connected to the additional star-point-connection 120 and to a voltage reference point, e.g., first star-point-connection 110 or one of the positive output connection 105 or negative output connection 107.

The switch-mode DC-DC-converter 100 comprises a first loop-current-inhibiting element 127, e.g., a transistor, connected in a serial circuit 130 comprising this first loop-current-inhibiting element 127, the first voltage limiting capacitor 117, and the first charge control inductance 116, all connected in series.

When a short-circuit or something similar like a dramatic decrease of load resistance, fast in time respect and large in amount, arises at the output connections 105, 107, the output current rises fast at those output connections 105, 107. As a consequence, the current in the first charge control inductance 116 and the first energy accumulating inductance 111 rises fast, too. To dampen or to stop this current rise at the output, an interrupting pulsing unit switching element 149, e.g., a transistor, may disconnect the load from the positive output connection 105 or negative output connection 107 of the switch-mode DC-DC-converter 100. But the current in the first charge control inductance 116 and the first energy accumulating inductance 111, cannot be stopped immediately, as every inductance has the characteristic of energy-storage in current. Looking at the current of the first charge control inductance 116, this current will then flow in a circuit loop with the first charge control unidirectional element 119 and/or voltage limiting capacitor 117. The current in the first charge control inductance 116 will decrease, but not very fast. If the rate of such short-circuits at the output is high, as for example in a plasma process with a high arc-rate, then the current in the first charge control inductance 116 will not have reached the initial value, when the next fast current rise due to the next short-circuit starts. Then the current will cumulate in this first charge control inductance 116 to a very high value which may destroy itself and/or other circuit components. So, an additional element is helpful to disconnect or dampen this current loop. Such an element may be the first loop-current-inhibiting element 127, e.g., built as a transistor and/or a switching element. This element may be switched to a high resistor value or even to be switched off, when such a current rise in the first charge control inductance 116 will start. As this current rise will come, when the short-circuit or arc in the plasma process is detected, and the interrupting pulsing unit switching element 149, e.g., a transistor, is switched off, the same control may also switch off the first loop-current-inhibiting element 127.

The serial circuit 130 with the first loop-current-inhibiting element 127, the first voltage limiting capacitor 117, and the first charge control inductance 116, is connected between the positive output connection 105 and negative output connection 107.

A further serial circuit with the first voltage limiting capacitor 117 and the charge control unidirectional element 119, e.g., diode, is connected between the positive output connection 105 and negative output connection 107.

The first loop-current-inhibiting element 127 may also be connected in series in this further serial circuit.

The first loop-current-inhibiting element 127 may be a transistor, in particular a MOSFET. The first loop-current-inhibiting element 127 here comprises two output connections, e.g., source and drain, or collector and emitter, and a control connection 124 where the control signal for switching of this component may be connected. Parallel to the output connections of the first loop-current-inhibiting element 127 is connected an antiparallel diode 128 of the first loop-current-inhibiting element. This diode may be the parasitic diode of the transistor.

The switch-mode DC-DC-converter 100 is connected to the pulsing unit 140. The positive output connection 105 of the switch-mode DC-DC-converter 100 is connected to the positive pulsing unit input connection 141.

The negative output connection 107 of the switch-mode DC-DC-converter 100 is connected to the negative pulsing unit input connection 143.

A DC voltage source 170 may be connected to the positive input connection 101 and the negative input connection 103 of the switch-mode DC-DC-converter 100.

The DC voltage source 170 may be a rectified and filtered AC Voltage. The AC-voltage may be a voltage provided by the energy grid.

The positive input connection 101 and the negative input connection 103 of the switch-mode DC-DC-converter 100 are the input connections of the switch-mode DC-DC-pulsing-converter 180.

The positive pulsing unit output connection 145 and the negative pulsing unit output connection 147 are the output connections of the switch-mode DC-DC-pulsing-converter 180.

The first charge control inductance 116 is connected between the first energy accumulating inductance 111 and one of the positive output connection 105 and the negative output connection 107.

A voltage limiting unidirectional element 118, e.g., a diode, is connected parallel to the first free-wheeling unidirectional element 115.

The first energy accumulating inductance 111 is connected between the one end of the first free-wheeling unidirectional element 115 and one end of the first energy accumulating inductance 111.

The voltage limiting unidirectional element 118, e.g., a diode, is connected between the first charge control inductance 116 and at least one of the positive input connection 101 and the positive output connection 105, in particular to both.

In another configuration it could also be connected between the first charge control inductance 116 and the negative input connection 103 and/or the negative output connection 107.

The voltage limiting unidirectional element 118, e.g., a diode, is connected between the first energy accumulating inductance 111 and at least one of the positive input connection 101 and the positive output connection 105, in particular to both.

In another configuration it could also be connected between first energy accumulating inductance 111 and the negative input connection 103 and/or the negative output connection 107.

The switch-mode DC-DC-converter 100 comprises a first step-down-converter 129, wherein the first step-down-converter 129 comprises the first energy accumulating inductance 111, the first power control switching element 113, and the first free-wheeling unidirectional element 115.

The switch-mode DC-DC-converter 100 may comprise alternatively or additionally one or several step-up converters.

The switch-mode DC-DC-converter 100 may comprise alternatively or additionally one or several step-up-down converters.

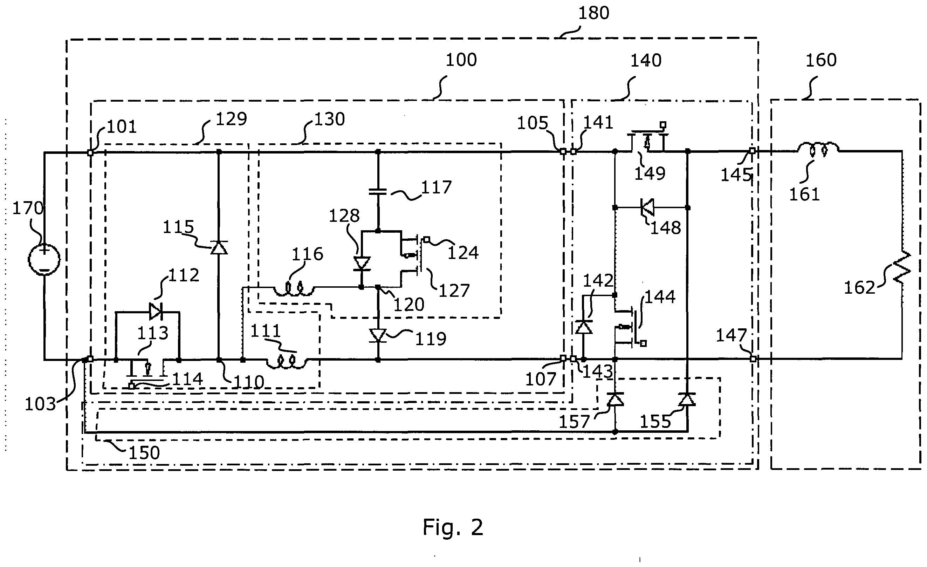

Fig. 2 shows a second embodiment of a switch-mode DC-DC-pulsing-converter 180 with a switch-mode DC-DC-converter, a pulsing unit 140, connected to a load 160. The same reference numbers have the corresponding meaning as in the previous figure. The arrangement is slightly different from that in Fig. 1.

The voltage reference point is here the first star-point-connection 110. It can be seen that there are several possibilities for the voltage reference point.

The first loop-current-inhibiting element 127 is connected between the first voltage limiting capacitor 117 and the first charge control unidirectional element 119.

The serial circuit 130 with the first loop-current-inhibiting element 127, the first voltage limiting capacitor 117, and the first charge control inductance 116, is connected between the positive output connection 105 and the first star-point-connection 110.

It can be seen that there are several possibilities for connecting and order the further circuit 130.

The further serial circuit of the first voltage limiting capacitor 117, the first loop-current-inhibiting element 127, and the first charge control unidirectional element 119 is connected between the positive output connection 105 and the negative output connection 107.

It can be seen that there are several possibilities for connecting and order the further serial circuit.

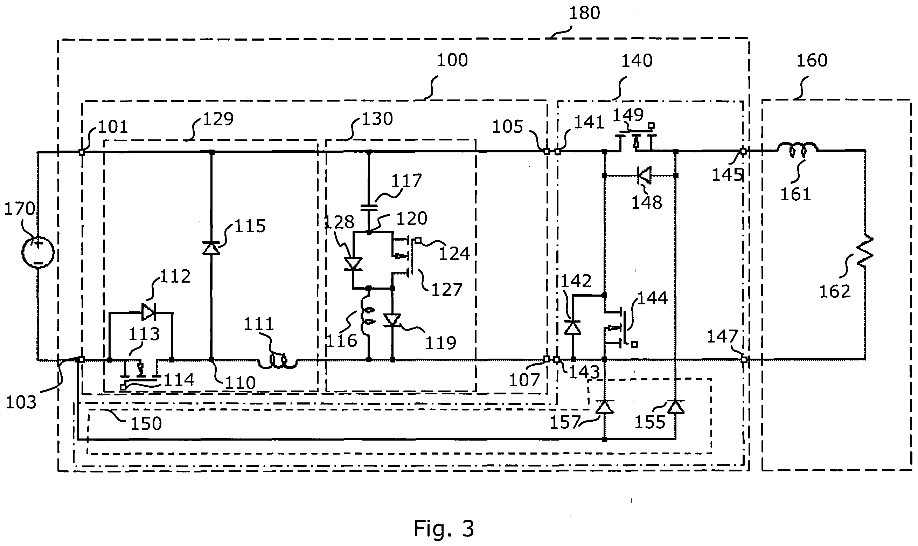

Fig. 3 shows a third embodiment of a switch-mode DC-DC-pulsing-converter 180 with a switch-mode DC-DC-converter 100, a pulsing unit 140, connected to a load 160. The same reference numbers have the corresponding meaning as in the previous figures. The arrangement is slightly different from that in Fig. 2.

The voltage reference point is here the negative output connection 107. It can be seen that there are several possibilities for the voltage reference point.

The serial circuit 130 with the first loop-current-inhibiting element 127, the first voltage limiting capacitor 117, and the first charge control inductance 116, is connected between the positive output connection 105 and the negative output connection 107.

It can be seen that there are several possibilities for connecting and order the further circuit 130.

As all embodiments of Fig. 1, Fig. 2 and Fig. 3 work, it is clear that also other slightly different embodiments may work. The serial circuit 130 and the further serial circuit could be reordered and connected to different input- or output connections of the DC-DC-converter, e.g.. At the moment, all development results so far show that the embodiment of Fig. 1 is the most preferred one.

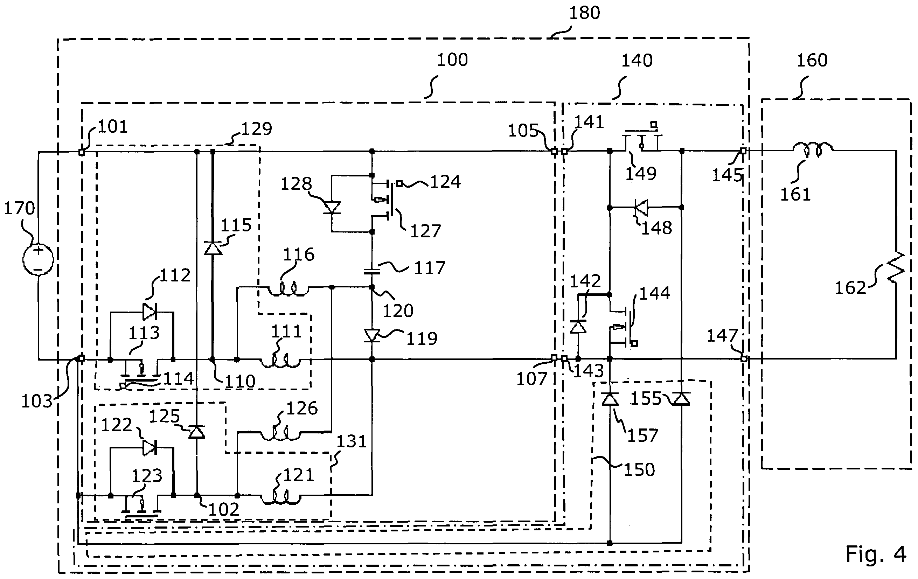

Fig. 4 shows a forth embodiment of a switch-mode DC-DC-pulsing-converter 180 with a switch-mode DC-DC-converter 100 comprising two step-down-converters, a pulsing unit 140, connected to a load 160. The same reference numbers have the corresponding meaning as in the previous figures. This embodiment is similar to the embodiment shown in Fig. 3.

With that embodiment it should be shown that a parallel design of a part of the DC-DC-converter is possible. This is the case for all possible embodiments, also for that in Fig. 1 and 2.

The switch-mode DC-DC-converter 100 comprises here:
- a second energy accumulating inductance 121,
- a second power control switching element 123, e.g., a transistor,
- a second free-wheeling unidirectional element 125, e.g., a diode, and
- a second charge control inductance 126.

The second energy accumulating inductance 121, the power control switching element 123, and the second free-wheeling unidirectional element 125 are connected together with their respective first end in a second star-point-connection 102. The second energy accumulating inductance 121 is connected with its second end to the negative output connection 107.

The power control switching element 123 is connected with its second end to the negative input connection 103.

The second free-wheeling unidirectional element 125 is connected with its second end to the positive input connection 101 and the positive output connection 105. The second charge control inductance 126 is connected to the additional star-point-connection 120 and to a voltage reference point, here to the second star-point-connection 102. Possible may it also be an alternative connection to one of:
- the positive output connection 105
- the negative output connection 107.

The switch-mode DC-DC-converter 100 comprises a second step-down-converter 131, wherein the second step-down-converter 131 comprises the second energy accumulating inductance 121, the second power control switching element 123, e.g., transistor, and the second free-wheeling unidirectional element 125, e.g., the diode.

Connecting two DC-DC-converters at least partially in parallel may offer several advantages, especially for applications requiring higher current or improved reliability. By connecting converters in parallel, the total current output capability increases, as each converter shares the load, allowing the system to deliver more current than a single converter could provide. This is particularly beneficial in high-power applications where a single converter may not handle the required current. Parallel operation can improve overall system efficiency. With the load shared between multiple converters, each converter may operate at a lower current, which can be more efficient than running a single converter at its maximum rating. Operating within their optimal efficiency range may reduce power loss and heat generation. Reliability and redundancy can also be improved with parallel connections. If one converter fails, the remaining converters may continue to supply power, providing redundancy. This is beneficial in applications where uninterrupted power supply is essential, such as in plasma processing, e.g.. Heat generation may be distributed more evenly across the system when the load is shared, helping to avoid hot spots, and reducing thermal stress on individual converters. This distribution potentially extends their operational lifespan and may improve overall thermal management. Parallel configurations may offer scalability. Additional converters can be added to increase power capacity without redesigning the entire power supply architecture, allowing for easy upgrades and expansions as power requirements grow. Proper design may allow that parallel DC-DC converters share the load evenly, reducing the risk of any single converter from being overloaded. This balance may be achieved even better with current-sharing controllers or droop control methods. Operating converters in parallel can also reduce electromagnetic interference (EMI). Each converter may handle a portion of the load current, reducing the stress and switching noise on individual converters, which can lead to lower EMI. Reduced EMI is beneficial in sensitive electronic environments where interference can affect performance. Parallel converters can improve the system's transient response to load changes. With multiple converters reacting to changes in load demand, the system may stabilize faster the output voltage, current, or power, providing better performance in dynamic applications.

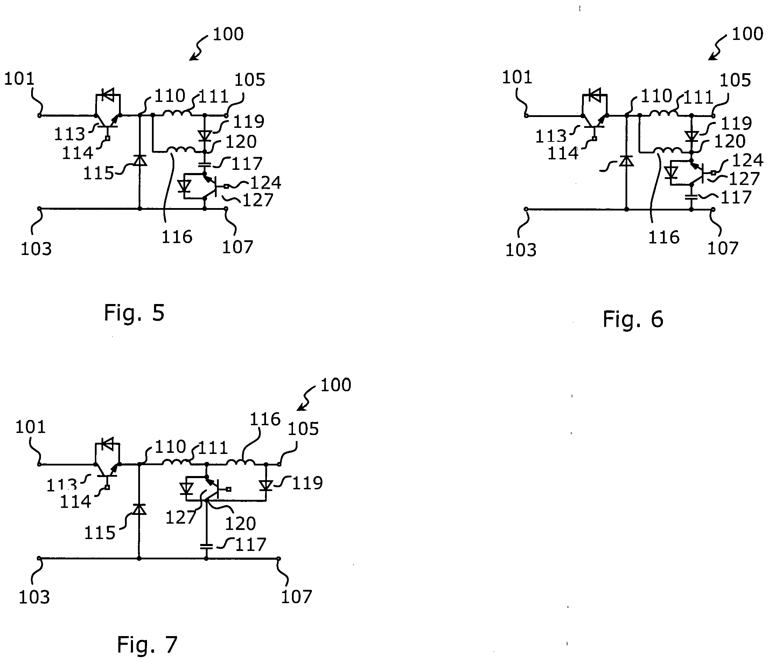

Fig. 5 shows a fifth embodiment of a switch-mode DC-DC-converter 100. The same reference numbers have the corresponding meaning as in the previous figures.

Fig. 6 shows a sixth embodiment of a switch-mode DC-DC-converter 100. The same reference numbers have the corresponding meaning as in the previous figures.

Fig. 7 shows a seventh embodiment of a switch-mode DC-DC-converter 100. The same reference numbers have the corresponding meaning as in the previous figures.

In the Figures 5 to 7 are shown equivalents of the DC-DC-converter 100 of Fig. 1 to 3. The difference is that those DC-DC-converters 100 have the reversed polarity.

This again shows that there are several possibilities for connecting and order the parts of the DC-DC-converter circuit. More than the seven embodiments shown here.

The embodiments of Fig. 1 to 7 show DC-DC-converters 100 with step-down-converters 129, 131. It should be understood that the development of the DC-DC-converter 100 disclosed in this application may also be realized with boost converters, buck-boost converters, Cuk converters, or SEPIC converters.

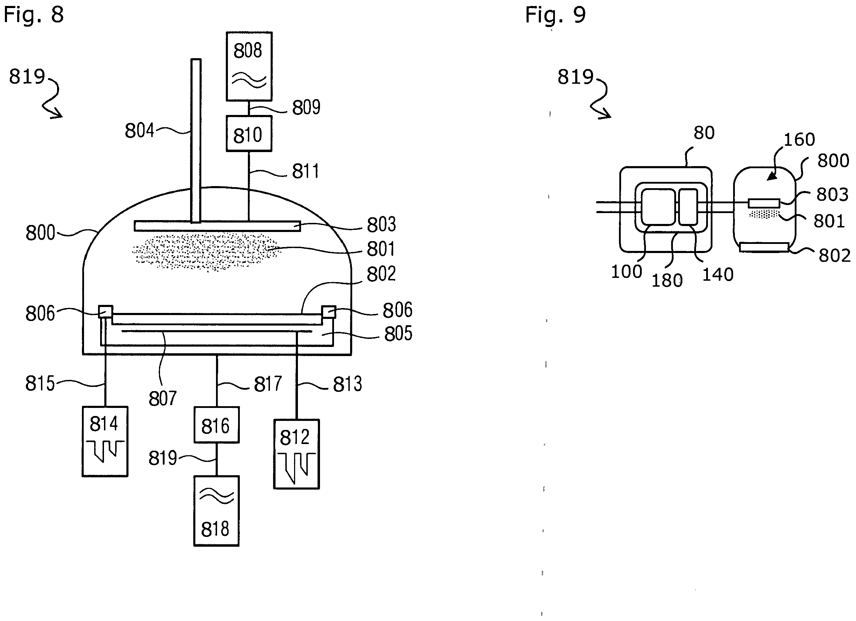

A DC-DC-converter 100 as well as a DC-DC-pulsing-converter 180 as described in this application may be part of a plasma power supply 80, which is shown e.g., in Fig. 9. Such a plasma power supply 80 may comprise a switch-mode DC-DC-converter 100 as described here. Such a plasma power supply 80 may comprise a switch-mode DC-DC-pulsing-converter 180 as described here. Such a plasma power supply 80, the DC-DC-converter 100, and the DC-DC-pulsing-converter may be configured to deliver power of at least 500 W, preferably of at least 1 kW, to a plasma process in a plasma chamber 800.

Fig. 8 shows a first embodiment of a plasma processing system 819 with a plasma chamber 800 in which a plasma 801 is established in a plasma space.

Such or similar systems are shown and described in US 2020 0118794 A1, US 80,474,184 B2, or US 10,607,813 B2 e.g.. In the plasma chamber an upper electrode 803 may be positioned. A gas inlet and/or outlet, in particular a gas supply pipe 804 may be placed from the outside to the inside of the plasma chamber 800, in particular connected to the electrode 803. A substrate 802, in particular a semiconductor wafer may be placed on a support 805 which comprises a substrate holder inside the plasma chamber 800. In use the substrate 802 may be processed by the plasma 801, e.g., in a process of etching, ashing, or deposition in particular with atomic layered deposition. Etching process may be an extremely high challenge, for instance when the ratio between etched hole diameter and hole length is extremely low, < 1/100, e.g., as it is in deep etching often necessary. An electric conductive electrode 806 may be placed in the plasma chamber 800, in particular nearby the substrate 802, for example around the substrate 802. This electric conductive electrode 806 may be an edge ring which may be also called focus ring. This electric conductive electrode 806 may be connected to a first plasma power supply 814 via a first connection line 815. The first plasma power supply 814 may be a plasma power supply 80 as described here. It may be a DC pulsed power supply, where in particular the pulses may be of different length, different amplitude and shape. The plasma process in the plasma chamber 800 may be the load 160 as described above. With the control of the first power supply 814 the electric conductive electrode 806 may be used additionally or alternatively as an ion energy and/or ion acceleration direction control as also described in US 9,287,086 B2 or US 10,474,184 B2. A first radio-frequency (RF) power supply 818 may be electrically connected to the support 805 via a first power feeding rod 819 and a first matching unit 816 and a first connection unit 817. A second RF power supply 808 may be electrically connected to the upper electrode 803 via a second power feeding rod 809 and a second matching unit 810 and a second connection unit 811. An electrode 807 may be positioned in or nearby the support 805 and is electrically connected to a second plasma power supply 812 via a second connection line 813. The second plasma power supply 812 may be a plasma power supply 80 as described here. It may be a DC pulsed power supply, where in particular the pulses may be of different length, different amplitude and shape as described in US 9,287,086 B2 Fig. 11, 14, or US 10,474,184 B2, Fig. 2 e.g.. The substrate 802 may be fixed at the support 805 via the electrode 807 which may work as an electrostatic chuck. With the control of the second power supply 812 the electrode 807 may be used additionally or alternatively as an ion energy and/or ion acceleration direction control as described in US 9,287,086 B2 or US 80,474,184 B2.

Some plasma treatment applications, such as etching or layer deposition, demand a high voltage (HV), high frequency (HF), rectangular, asymmetrical, pulsed voltage supply. Often the voltage values significantly exceed the voltage handling possibilities of individual semiconductor switches, especially when high frequency operation is required.

Some plasma applications require not only pulsing, but pulse-to-pulse amplitude variation. Some plasma applications require the source to deliver high peak currents in order to obtain short voltage transition times. Most plasma applications present a load, which contains a capacitive component. Significant power loss is related to the pulse-by-pulse charging and discharging process of this load capacitance.

Fig. 9 shows a further embodiment of a plasma processing system 819. The same reference numbers have the corresponding meaning as in the previous figures. The plasma processing system 819 comprises here a plasma power supply 80. The plasma power supply 80 comprises a switch-mode DC-DC-converter 100 as described in this application, and an optional pulsing unit 140, connected between the DC-DC-converter 100 and the load 160. The load 160 is here a DC plasma process. The DC power from the output of the plasma power supply 80, which is converted in particular to a specified power, voltage, and current by the switch-mode DC-DC-converter 100, is fed into this DC plasma process.

The plasma process may be a semiconductor manufacturing process.

Using a plasma power supply in semiconductor manufacturing presents several specific challenges. One major challenge is achieving the extremely high levels of precision required. Semiconductor manufacturing demands exact control over the plasma's properties, such as density, energy, and uniformity, to ensure the precise etching and deposition of materials on a microscopic scale. Any fluctuations or instability in the plasma can lead to defects in the semiconductor wafers, impacting the yield and quality of the final products.

Another challenge is dealing with the high-power demands and the associated thermal management. Plasma processes often require significant power levels, which can generate a considerable amount of heat. Managing this heat is critical to maintaining the stability and longevity of the power supply and the plasma chamber. In order to generate not a little bit too much loss energy, the plasma power supply needs to be very efficient to be reliable.

Controlling the electromagnetic interference (EMI) generated by the plasma power supply is another significant challenge. The high-frequency operation required for plasma generation can produce EMI that can interfere with other sensitive equipment used in semiconductor fabrication. Effective shielding, filtering, and grounding are necessary to minimize these effects and prevent disruptions in the manufacturing process.

Moreover, semiconductor manufacturing environments require high levels of cleanliness and contamination control. The plasma power supply must be designed to operate in such environments without introducing particulates or other contaminants that could compromise the integrity of the semiconductor wafers. Therefor often totally closed cabinets are obligatory, which enhances the challenge to find a design which does not heat up too much. Additionally, maintaining the reliability and uptime of the plasma power supply is critical. Semiconductor manufacturing processes are highly sensitive to interruptions and downtime can be extremely costly. The power supply must be highly reliable and capable of continuous operation under demanding conditions, with robust diagnostic and fault-tolerant features to quickly address any issues that arise.

As mentioned earlier, arcs may arise randomly in a plasma process. Such arcs are extremely critical in semiconductor processes as they have the ability to destroy the semiconductor product which is very expensive and one arc with too much energy may produce a damage of several thousands of US-Dollar. An arc-development should be detected, and any current rise should be prohibited as fast as possible to keep the arc-energy under a critical value. Also, for that reason, the plasma power supply 80 needs a pulsing unit 140. This pulsing unit may have a short-circuit pulsing unit switching element to extinct every current rise at the output of the plasma power supply 80. Also, this short circuit prohibits a usual capacitor at the output of the DC-DC-converter 100. So, the first charge control unidirectional element 119 was connected in series with the first voltage limiting capacitor 117.

## Claims

1. Switch-mode DC-DC-converter (100) comprising:
• a positive input connection (101),
• a negative input connection (103),
• a positive output connection (105),
• a negative output connection (107),
• a first energy accumulating inductance (111),
• a first power control switching element (113), e.g., a transistor,
• a first free-wheeling unidirectional element (115), e.g., a diode,
• a first voltage limiting capacitor (117),
• a first charge control unidirectional element (119), e.g., a diode, and
• a first charge control inductance (116), and wherein
the first energy accumulating inductance (111), the first power control switching element (113), and the first free-wheeling unidirectional element (115) are connected together with their respective first end in a first star-point-connection (110) and, with their respective second end, to one of:
• the positive input connection (101),
• the negative input connection (103),
• the positive output connection (105), or
• the negative output connection (107), and wherein
the first voltage limiting capacitor (117) and the charge control unidirectional element (119) connected together in an additional star-point-connection (120) and, on their other end, to one of:
• the positive input connection (101),
• the negative input connection (103),
• the positive output connection (105), or
• the negative output connection (107), and wherein
the first charge control inductance (116) is connected to the additional star-point-connection (120) and to a voltage reference point, e.g., the first star-point-connection (110) or one of:
• the positive input connection (101),
• the negative input connection (103),
• the positive output connection (105), or
• the negative output connection (107).

2. Switch-mode DC-DC-converter (100) according to claim 1, wherein the switch-mode DC-DC-converter (100) comprises a first loop-current-inhibiting element (127), e.g., a transistor, connected in a serial circuit (130) comprising this first loop-current-inhibiting element (127), the first voltage limiting capacitor (117), and the first charge control inductance (116), all connected in series.

3. Switch-mode DC-DC-converter (100) according to the preceding claim 2,
wherein the serial circuit (130) with the first loop-current-inhibiting element (127) is connected between the positive output connection (105) and negative output connection (107).

4. Switch-mode DC-DC-converter (100) according to one of the preceding claims, wherein the switch-mode DC-DC-converter (100) comprises:
• a second energy accumulating inductance (121),
• a second power control switching element (123), e.g., a transistor,
• a second free-wheeling unidirectional element (125), e.g., a diode, and
• a second charge control inductance (126), and wherein
the second energy accumulating inductance (121), the power control switching element (123), and the second free-wheeling unidirectional element (125) connected together with their respective first end in a second star-point-connection (102) and, with their respective second end, to one of:
• the positive input connection (101),
• the negative input connection (103),
• the positive output connection (105), or
• the negative output connection (107), and wherein
the second charge control inductance (126) is connected to the additional star-point-connection (120) and to a voltage reference point, e.g., the second star-point-connection (102) or one of:
• the positive output connection (105),
• the negative output connection (107).

5. Switch-mode DC-DC-converter (100) according to one of the preceding claims, wherein the first charge control inductance (116) is connected between the first energy accumulating inductance (111) and one of
• the positive output connection (105),
• the negative output connection (107).

6. Switch-mode DC-DC-converter (100) according to one of the preceding claims, wherein a voltage limiting unidirectional element (118), e.g., a diode, is connected parallel to the first free-wheeling unidirectional element (115), with the first energy accumulating inductance (111) connected between the one end of the first free-wheeling unidirectional element (115) and one end of the first energy accumulating inductance (111).

7. Switch-mode DC-DC-converter (100) according to one of the preceding claims, wherein a voltage limiting unidirectional element (118), e.g., a diode, is connected between the first charge control inductance (116) and one of
• the positive input connection (101),
• the negative input connection (103),
• the positive output connection (105), or
• the negative output connection (107).

8. Switch-mode DC-DC-converter (100) according to one of the preceding claims, wherein a voltage limiting unidirectional element (118), e.g., a diode, is connected between the first energy accumulating inductance (111) and one of
• the positive input connection (101),
• the negative input connection (103),
• the positive output connection (105), or
• the negative output connection (107).

9. Switch-mode DC-DC-converter (100) according to one of the preceding claims, wherein the switch-mode DC-DC-converter (100) comprises a first step-down-converter (129), wherein the first step-down-converter (129) comprises the first energy accumulating inductance (111), the first power control switching element (113), and the first free-wheeling unidirectional element (115).

10. Switch-mode DC-DC-converter (100) according to one of the preceding claims, wherein the switch-mode DC-DC-converter (100) comprises a second step-down-converter (131), wherein the second step-down-converter (131) comprises the second energy accumulating inductance (121), the second power control switching element (123), e.g., transistor, and the second free-wheeling unidirectional element (125), e.g., the diode.

11. Switch-mode DC-DC-pulsing-converter (180) comprising a switch-mode DC-DC-converter (100) according to one of the preceding claims and a pulsing unit (140) comprising a positive pulsing unit input connection (141), a negative pulsing unit input connection (143), a positive pulsing unit output connection (145), and a negative pulsing unit output connection (147), an interrupting pulsing unit switching element (149), and a short-circuit pulsing unit switching element (144).

12. Switch-mode DC-DC-pulsing-converter (180) according to claim 11, comprising a load circuit free-wheeling component (155), e.g., a diode, connected between the positive pulsing unit output connection (145) and the negative input connection (103) or between the positive input connection (101) and the negative pulsing unit output connection (147).

13. Switch-mode DC-DC-pulsing-converter (180) according to one of the preceding claims 11 to 12, comprising a pulser free-wheeling component (157), e.g., a diode, connected between the positive pulsing unit output connection (145) and the positive input connection (101) or between negative pulsing unit output connection (147) and the negative input connection (103).

14. Plasma power supply (80) with a switch-mode DC-DC-converter (100) or a switch-mode DC-DC-pulsing-converter (180) according to one of the preceding claims, configured to deliver power of at least 500 W, preferably of at least 1 kW, to a plasma process in a plasma chamber (800).

15. Plasma processing system (819) with a plasma power supply (80) according to claim 14 and a plasma chamber (800), configured to build a plasma process inside the plasma chamber (800) where this plasma process works as a load (160) for the plasma power supply (80).
